# EUROPEAN PATENT SPECIFICATION

(11) **EP 2 590 369 B1**
(45) Date of publication and mention of the grant of the patent: **10.01.2018**
(21) Application number: 12191385.9
(22) Date of filing: 06.11.2012
(51) Int. Cl.: H04L 12/46

(54) **METHOD AND DEVICE FOR CONNECTING TO VIRTUAL PRIVATE NETWORK ACROSS DOMAINS**
Verfahren und Vorrichtung für den Anschluss an virtuellen privaten Netzwerks über mehrere Domains
Procédé et dispositif pour la connexion à un réseau privé virtuel entre les domaines.

(30) Priority: 07.11.2011 CN 201110350020
(43) Date of publication of application: 08.05.2013
(73) Proprietor: Huawei Technologies Co., Ltd., Longgang District Shenzhen, Guangdong 518129 (CN)
(72) Inventor: Zeng, Qing, 518129 Shenzhen (CN); Yu, Delei, 518129 Shenzhen (CN)
(74) Representative: Thun, Clemens

(56) References cited:
- WO-A1-02/50695
- YONG S HARES HUAWEI L: "L3VPN Protocol Gap Analysis for Data Centers; draft-yong-vpn4dc-protocol-gap-analysis-00 .txt", L3VPN PROTOCOL GAP ANALYSIS FOR DATA CENTERS; DRAFT-YONG-VPN4DC-PROTOCOL-GAP-ANALYSIS-00 .TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 24 October 2011 (2011-10-24), pages 1-8, XP015078824, [retrieved on 2011-10-24]
- ZENG D YU HUAWEI TECHNOLOGIES Q: "Experiment of Example Solution for VPN4DC; draft-zeng-vpn4dc-example-solution-01.txt" , EXPERIMENT OF EXAMPLE SOLUTION FOR VPN4DC; DRAFT-ZENG-VPN4DC-EXAMPLE-SOLUTION-01.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 31 October 2011 (2011-10-31), pages 1-9, XP015079302, [retrieved on 2011-10-31]

## Description

### FIELD OF THE INVENTION

The present invention relates to the field of communications, and in particular, to a method and a device for connecting to a virtual private network across domains.

### BACKGROUND OF THE INVENTION

As data centre applications spread, enterprises do not need to purchase devices to build their own information technology (Information Technology, IT) centres. An enterprise may apply for a group of IT resources from a data centre to provide cloud computing services to the enterprise. The IT resources are managed by the data centre. Hardware resources in the data centre provide cloud computing services to various enterprises as virtualized devices. For example, a certain enterprise applies for N servers from a data centre. The data centre will not physically allocate N servers to the enterprise for use. Instead, the data centre provides N virtual servers from the hardware resources for use by the enterprise according to requirements of the enterprise for the servers (such as CPU, memory, and hard disk capacity). These virtual servers are separated by using VPN (Virtual Private Network, virtual private network) technology to form a virtual data centre (Virtual Data Centre, VDC).

An enterprise user who applies for IT resources from the data centre wishes to join its own virtual private network VPN in the virtual data centre and securely access the resources in the virtual data centre VDC. However, bearer network operators need to perform admission control on connection of VDCs to VPNs. A VDC needs to be prevented from connecting to an improper VPN. For example, security risks occur when the VDC of enterprise A connects to the VPN of enterprise B. On the other hand, VPN route information should not be spread to unknown sites without authorization. Option A and Option D in cross-domain VPN technology are widely used in actual applications. In the Option A (that is, VPN Routing and Forwarding Tables to VPN Routing and Forwarding Tables, VPN instance to VPN instance) mode, an autonomous system border router (Autonomous System Border Router, ASBR) establishes a link connection for each VPN instance, and route interaction and data forwarding of the local VPN are performed in this link connection. A provider edge (Provider Edge, PE) for connection between an MPLS VPN (Multiple protocol Label Switching Virtual Private Network, multiple protocol label switching virtual private network) and a data centre (Data Centre, DC) is the ASBR in the MPLS VPN domain. The ASBR in the DC domain is a data centre gateway (Data Centre Gateway, DCG). In the prior art, the MPLS VPN domain and the DC domain, through negotiation at the management layer, realize connection of a VDC to a VPN by means of manual configuration or configuration through respective network management systems. As the data centre domain and the MPLS VPN domain belong to two different management entities, the efficiency of information exchange for connection of each VDC to a VPN is low, and does not meet application requirements.

The document "YONG S HARES HUAWEI L: L3VPN PROTOCOL GAP ANALYSIS FOR DATA CENTRES; XP015078824" shows a virtual private network protocol L3VPN and how to connect to such a network.

The document "ZENG D YU HUAWEI TECHNOLOGIES Q: EXPERIMENT OF EXAMPLE SOLUTION FOR VPN4DC, XP015079302" shows a system and method for auto provision of a VPN network VPN4DC.

### SUMMARY OF THE INVENTION

The technical problem to be solved by embodiments of the present invention is to provide a method and a device for connecting to a virtual private network across domains. Connection to a VPN can be realized through inband signaling on the premise of interconnection between a PE and a DCG in the Option A or Option D mode, thereby significantly improving the efficiency of connecting the VDC to the VPN.

According to a first aspect of the present invention, a method as in claim 1 for connecting to a virtual private network across domains is provided. The method includes:
receiving, by a provider edge PE, a request message for connecting a virtual data centre VDC to a first virtual private network VPN, sent by a data centre gateway DCG through a first link connection, where the request message includes a first VPN user identity, and a connection identity at a DCG end of an attachment circuit AC;
querying, by the provider edge PE, according to the first VPN user identity, a preset correspondence table for VPN identity and VPN configuration to acquire a route distinguish RD/route target RT list corresponding to the first VPN user identity to configure a VPN instance; and
determining, by the provider edge PE, according to the connection identity at the DCG end of the AC, a connection identity at a PE end of the AC, and binding a logical port in the determined connection identity at the PE end with the configured VPN instance, so that the virtual data centre VDC is connected to the VPN.

According to a second aspect of the present invention, a provider edge as in claim 7 for connecting to a virtual private network across domains is provided. The provider edge includes:
a first receiving module, configured to receive a request message for connecting a virtual data centre VDC to a first virtual private network VPN, sent by a data centre gateway DCG through a first link connection, where the request message includes a first VPN user identity, and a connection identity at a DCG end of an attachment circuit AC;
a first acquiring module, configured to query, according to the first VPN user identity, a preset correspondence table for VPN identity and VPN configuration to acquire a route distinguish RD/route target RT list corresponding to the first VPN user identity to configure a VPN instance; and
a first determining module, configured to determine, according to the connection identity at the DCG end of the AC, a connection identity at a PE end of the AC, and bind a logical port in the determined connection identity at the PE end with the configured VPN instance, so that the virtual data centre VDC is connected to the VPN.

By implementing the embodiments of the present invention, the following beneficial effect is produced. Connection to a VPN can be realized through inband signaling on the premise of interconnection between a PE and a DCG in the Option A or Option D mode, thereby significantly improving the efficiency of connecting the VDC to the VPN.

### BRIEF DESCRIPTION OF THE DRAWINGS

To illustrate the technical solutions in the embodiments of the present invention or in the prior art more clearly, the accompanying drawings for describing the embodiments or the prior art are given briefly below. Apparently, the accompanying drawings in the following description are only some embodiments of the present invention, and persons of ordinary skill in the art can derive other drawings from the accompanying drawings without creative efforts.
FIG. 1 is a first schematic flowchart of a method for connecting to a virtual private network across domains according to an embodiment of the present invention;
FIG. 2 is a second schematic flowchart of a method for connecting to a virtual private network across domains;
FIG. 3 is a first schematic structural diagram of a provider edge for connecting to a virtual private network across domains according to an embodiment of the present invention;
FIG. 4 is a second schematic structural diagram of a provider edge for connecting to a virtual private network across domains;
FIG. 5 is a third schematic flowchart of a method for connecting to a virtual private network across domains; and
FIG. 6 is a third schematic structural diagram of a provider edge for connecting to a virtual private network across domains.

### DETAILED DESCRIPTION OF THE EMBODIMENTS

The technical solutions in the embodiments of the present invention will be clearly and completely described in the following with reference to the accompanying drawings. It is obvious that the embodiments to be described are only a part rather than all of the embodiments of the present invention. All other embodiments obtained by persons skilled in the art based on the embodiments of the present invention without creative efforts shall fall within the protection scope of the present invention.

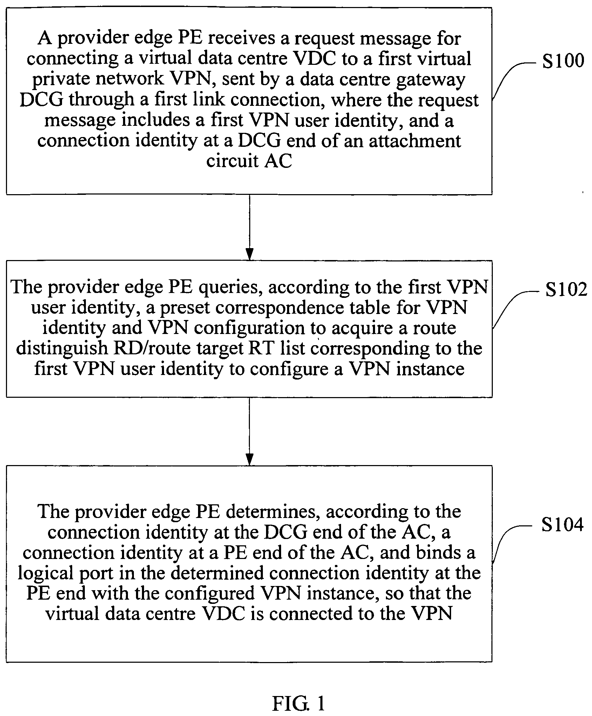

FIG. 1 is a first schematic flowchart of a method for connecting to a virtual private network across domains according to an embodiment of the present invention. The method specifically includes the following steps.
S100: A provider edge PE receives a request message for connecting a virtual data centre VDC to a first virtual private network VPN, sent by a data centre gateway DCG through a first link connection, where the request message includes a first VPN user identity, and a connection identity at a DCG end of an attachment circuit AC.
S102: The provider edge PE queries, according to the first VPN user identity, a preset correspondence table for VPN identity and VPN configuration to acquire a route distinguish RD/route target RT list corresponding to the first VPN user identity to configure a VPN instance.
S104: The provider edge PE determines, according to the connection identity at the DCG end of the AC, a connection identity at a PE end of the AC, and binds a logical port in the determined connection identity at the PE end with the configured VPN instance, so that the virtual data centre VDC is connected to the VPN.

In the embodiment of the present invention, the provider edge PE receives a request message for connecting a virtual data centre VDC created by a data centre gateway DCG to a first VPN sent by the DCG, where the request message includes a first VPN user identity, that is, a user identity (User ID) of the VPN to which the VDC is to be connected, and a connection identity at a DCG end of an attachment circuit (Attachment Circuit, AC), where the connection identity includes a physical port number (Port ID) and a logical port number (Vlan ID) at the DCG local end. In the embodiment of the present invention, the packet format of the request message may be shown in Table 1.

**Table 1**

| | |
|---|---|
| User ID length | User ID value (variable, variable length) |
| Vlan ID length | Vlan ID value (variable, variable length) |
| Port ID length | Port ID value (variable, variable length) |
| Local IP length | Local IP value (variable, variable length) |
| Remote IP length | Remote IP value (variable, variable length) |

The request message for connecting the virtual data centre VDC to the VPN is sent through a first link connection. The first link connection may include an IPv4 BGP (Border Gateway Protocol, border gateway protocol) link, a protocol link that bears 802.1X, and an LDP (Label Distribution Protocol, label distribution protocol) link. For example, by using the BGP to bear the request message for connecting the VDC to the VPN, signaling exchange may be implemented by exchanging an Update packet, and an extended community attribute (Extend Community) of the BGP Update packet may be defined to bear the information included in the request message. As another example, by using the BGP to bear the request message for connecting the VDC to the VPN, signaling exchange may also be implemented through a BGP dynamic capability negotiation process, and a new category of capability parameters (Capability Param.) for BGP Open packets may be defined to bear the information included in the request message. The packet format of Capability Param. may be shown in Table 2, including capability code (Capability Code), capability length (Capability Length), message type (Type), length (Length), and value (Value). The message type may include join (join) message, leave (leave) message, and notify (Notify) message.

**Table 2**

| | |
|---|---|
| Capability Code | Capability Length |
| Type: Join/Leave/Notify | Length |
| Value (variable, variable length) | |

As an example, in the embodiment of the present invention, before receiving the request message for connecting the VDC to the VPN, the PE performs a pre-configuration operation on the DCG, specifically, including: creating a VDC on the DCG according to a user request, where the VDC may be viewed as a VPN instance on the DCG; allocating a corresponding attachment circuit AC to the VDC, where the attachment circuit AC includes a physical port and a logical port; and then binding the created VDC with the logical port allocated to the VDC. On the DCG, a pair of IP addresses will further be allocated to the AC, between the PE and the DCG; of the VDC according to an IP address segment at a VPN site given when the user requests connection to the VPN, and a route learning method, for example, EBGP (External Border Gateway Protocol, external border gateway protocol), between the PE and the DCG will further be configured on the DCG. The request message for connecting the VDC to the VPN sent by the DCG to the PE further includes a pair of IP addresses allocated by the DCG to the AC, between the PE and the DCG, of the VDC, that is, IP addresses at both ends of the attachment circuit AC, that is, the local IP (Local IP) and remote IP (Remote IP) in Table 1. In the embodiment of the present invention, a connection relationship table for the physical ports and logical ports at both ends is stored at both the PE and the DCG. In this way, given that information about the remote physical and logical ports is known, information about the local physical and logical ports can be determined by querying the corresponding connection relationship table. The connection relationship table for the physical ports and logical ports at the local and remote ends may be manually created by an administrator, and may also be created through automatic discovery by using the link layer discovery protocol (Link Layer Discovery Protocol, LLDP).

As an example, before the PE receives the request message for connecting the VDC to the VPN, in addition to performing pre-configuration on the DCG, the PE further needs to perform pre-configuration at the PE side, and set the attachment circuit AC at the PE side to be in a block state. Specifically, the block state is as follows: The physical ports and logical ports at both ends of the attachment circuit AC are normal; block the ports and block the IP connection at the PE side, do not configure a VPN instance and do not configure a binding relationship between the VPN instance and the physical port/logical port (or, configure a VPN instance but not bind the configured VPN instance with the physical port/logical port) on the PE, and neither receive nor publish the VPN route of the PE at the VPN side.

The PE queries, according to the first VPN user identity, a preset correspondence table for the VPN identity and VPN configuration to acquire a route distinguish RD/route target RT list corresponding to the first VPN user identity so as to configure a VPN instance. The correspondence table for the VPN identity and VPN configuration in the embodiment of the present invention may be a VPN User ID and RD/RT (Route Distinguish/Route Target, route distinguish/route target) list, where the RD/RT list may be stored on the PE, and the RD/RT corresponding to a VPN User ID is acquired through query, and the RD/RT list may further be stored on an authentication server or a VPN manager (Manager) other than the PE, and the PE may acquire the RD/RT corresponding to the VPN User ID through an independent authentication process.

In the embodiment of the present invention, the PE determines the physical port and logical port at the PE end of the AC according to the connection identity (including a physical port and a logical port) at the DCG end of the attachment circuit AC in the request message, binds the determined logical port with the configured VPN instance, configures a port IP address, and configures a route learning method between the PE and the DCG, thereby realizing connection of the VDC to the VPN. After the VDC successfully connects to the VPN, the PE sends a connection success message to the DCG. If the VDC fails to connect to the VPN, the PE returns a connection failure message to the DCG, where the connection failure message carries a failure error code that indicates the failure cause.

After the VDC connects to the VPN, if the VDC needs to leave the VPN, the DCG sends a request message for leaving the first VPN by the VDC to the PE, where the request message may be sent through the first link connection. The request message for leaving the first VPN by the VDC may include the first VPN user identity, and the connection identity at the DCG end of the attachment circuit AC. In other embodiments of the present invention, the request message for leaving the VPN by the VDC may not include the VPN user identity. After receiving the request message for leaving the VPN by the VDC sent by the DCG, the PE determines the connection identity at the PE end, that is, the physical port and logical port at the PE end, according to the connection identity at the DCG end of the attachment circuit AC; and deletes the binding relationship with the corresponding VPN instance on the determined physical port and logical port, deletes IP address configuration, deletes the route control protocol between the PE and the DCG on the port of the VPN instance, and blocks this port; if the VPN instance is not bound with any other port, the information about the VPN instance may be deleted. Then, the PE returns a message, indicating that the VDC leaves the VPN successfully, to the DCG. If an error occurs in the foregoing processing, the VDC will fail to leave the VPN. Then, the PE returns a message, indicating that the VDC fails to leave the VPN, to the DCG, and carries a failure error code that indicates the cause in the leave failure message.

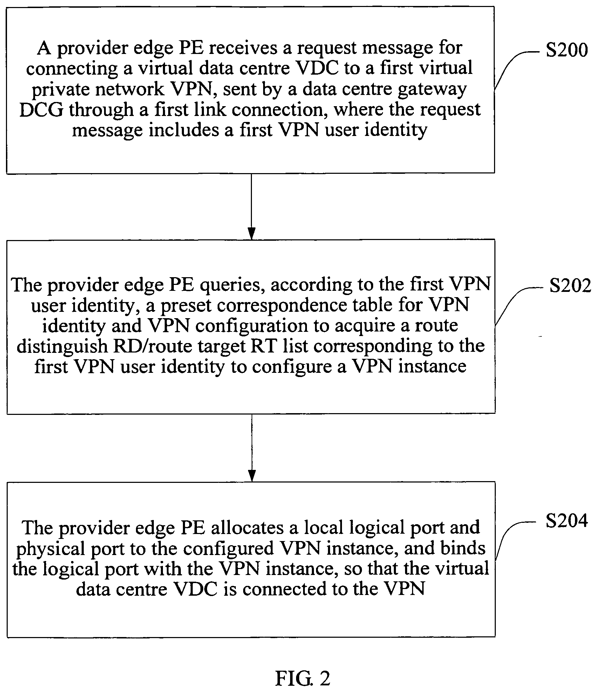

FIG. 2 is a second schematic flowchart of a method for connecting to a virtual private network across domains. The method specifically includes the following steps.
S200: A provider edge PE receives a request message for connecting a virtual data centre VDC to a first virtual private network VPN, sent by a data centre gateway DCG through a first link connection, where the request message includes a first VPN user identity.
S202: The provider edge PE queries, according to the first VPN user identity, a preset correspondence table for VPN identity and VPN configuration to acquire a route distinguish RD/route target RT list corresponding to the first VPN user identity to configure a VPN instance.
S204: The provider edge PE allocates a local logical port and physical port to the configured VPN instance, and binds the logical port with the VPN instance, so that the virtual data centre VDC is connected to the VPN.

The provider edge PE receives a request message for connecting a virtual data centre VDC created by a data centre gateway DCG to a first VPN sent by the DCG, where the request message includes a first VPN user identity, that is, a user identity User ID of the VPN to which the VDC is to be connected. The packet format of the request message may be shown in Table 3.

**Table 3**

| | |
|---|---|
| User ID length | User ID value (variable, variable length) |
| Local IP length | Local IP value (variable, variable length) |
| Remote IP length | Remote IP value (variable, variable length) |

As an example, the request message for connecting the virtual data centre VDC to the VPN is sent through a first link connection, where the first link connection may include an IPv4 BGP link, a protocol link that bears 802.1X, and an LDP link.

Before receiving the request message for connecting the VDC to the VPN, the PE performs pre-configuration operation on the DCG, specifically, including: creating a VDC on the DCG according to a user request; allocating a pair of IP addresses to the attachment circuit AC, between the PE and the DCG, of the VDC according to an IP address segment at a VPN site given when the user requests connection to the VPN; and configuring a route learning method between the PE and the DCG. The request message for connecting the VDC to the VPN sent by the DCG to the PE further includes a pair of IP addresses allocated by the DCG to the AC, between the PE and the DCG, of the VDC, that is, IP addresses at both ends of the attachment circuit AC, that is, the local IP address (Local IP) and remote IP address (Remote IP) in Table 3. A connection relationship table for the physical ports and logical ports at both ends is stored at both the PE and the DCG. In this way, given that information about the remote physical and logical ports is known, information about the local physical and logical ports can be determined by querying the corresponding connection relationship table. The connection relationship table for the physical ports and logical ports at the local and remote ends may be manually created by an administrator, and may also be created through automatic discovery by using the link layer discovery protocol LLDP.

Before the PE receives the request message for connecting the VDC to the VPN, in addition to performing pre-configuration on the DCG, the PE further needs to perform pre-configuration at the PE side, and set the attachment circuit AC at the PE side to be in a block state. Specifically, the block state is as follows: The physical ports and logical ports at both ends of the attachment circuit AC are normal; block the ports and block the IP connection at the PE side, do not configure a VPN instance and do not configure a binding relationship between the VPN instance and the physical port/logical port (or, configure a VPN instance but not bind the configured VPN instance with the physical port/logical port) on the PE, and neither receive nor publish the VPN route of the PE at the VPN side.

The PE queries, according to the first VPN user identity, a preset correspondence table for the VPN identity and VPN configuration to acquire an RD/RT list corresponding to the first VPN user
identity so as to configure a VPN instance. The correspondence table for the VPN identity and VPN configuration may be a VPN User ID and RD/RT list, where the RD/RT list may be stored on the PE, and the RD/RT corresponding to a VPN User ID is acquired through query, and the RD/RT list may further be stored on an authentication server or a VPN manager (Manager) other than the PE, and the PE may acquire the RD/RT corresponding to the VPN User ID through an independent authentication process.

After configuring the VPN instance, the PE further allocates a local logical port and a corresponding physical port to the configured VPN instance, binds the configured VPN instance with the logical port allocated to the VPN instance, configures a port IP address, and configures a route learning method between the PE and the DCG. Then, the PE sends an AC allocation success message to the DCG, where the AC allocation success message includes information about the local logical port and physical port allocated by the PE. The packet format of the AC allocation success message may be shown in Table 4. The message includes notification type (Notify Type), where the notification type of the AC allocation success message is AC allocation success (Allocated AC OK), and the message further includes the local logical port (Vlan ID) and physical port (Port ID) allocated by the PE, and may further include a VPN user identity (User ID).

**Table 4**

| Notify Type=Allocated AC OK | |
|---|---|
| User ID length | User ID value (variable, variable length) |
| Vlan ID length | Vlan ID value (variable, variable length) |
| Port ID length | Port ID value (variable, variable length) |

After receiving the AC allocation success message sent by the PE, the data centre gateway DCG determines connection information about the logical port and physical port at the DCG local end of the AC according to the information about the logical port and physical port at the PE end, so as to bind the determined logical port at the DCG end with the VDC created by the DCG, configures the port IP address, and configures a route learning method between the PE and the DCG, thereby realizing connection of the VDC to the VPN.

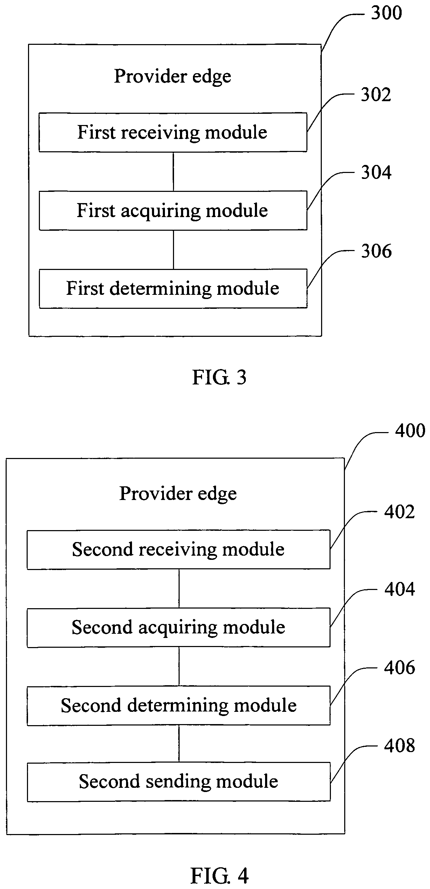

FIG. 3 is a first schematic structural diagram of a provider edge for connecting to a virtual private network across domains according to an embodiment of the present invention. The provider edge 300 includes:
a first receiving module 302, configured to receive a request message for connecting a virtual data centre VDC to a first virtual private network VPN, sent by a data centre gateway DCG through a first link connection, where the request message includes a first VPN user identity, and a connection identity at a DCG end of an attachment circuit AC;
a first acquiring module 304, configured to query, according to the first VPN user identity, a preset correspondence table for VPN identity and VPN configuration to acquire a route distinguish RD/route target RT list corresponding to the first VPN user identity to configure a VPN instance; and
a first determining module 306, configured to determine, according to the connection identity at the DCG end of the AC, a connection identity at a PE end of the AC, and bind a logical port in the determined connection identity at the PE end with the configured VPN instance, so that the virtual data centre VDC is connected to the VPN.

The first receiving module of the provider edge PE in the embodiment of the present invention receives a request message for connecting a virtual data centre VDC created by a DCG to a first VPN sent by the DCG, where the request message includes a first VPN user identity, that is, a User ID of the VPN to which the VDC is to be connected, and a connection identity at a DCG end of an attachment circuit AC, where the connection identity includes a physical port number (Port ID) and a logical port number (Vlan ID) at the DCG local end. In addition to the User ID of the VPN to which the VDC is to be connected and the connection identity at the DCG end of the attachment circuit, the request message in the embodiment of the present invention further includes IP addresses at both ends of the attachment circuit AC, where the IP addresses are a pair of IP addresses allocated by the DCG to the attachment circuit AC, between the PE and the DCG, of the created VDC. The request message for connecting the VDC to the VPN is sent through a first link connection, where the first link connection may include an IPv4 BGP link, a protocol link that bears 802.1X, and an LDP link. In the embodiment of the present invention, a connection relationship table for the physical ports and logical ports at both ends is stored at both the PE and the DCG. In this way, given that information about the remote physical and logical ports is known, information about the local physical and logical ports can be determined by querying the corresponding connection relationship table. The connection relationship table for the physical ports and logical ports at the local and remote ends may be manually created by an administrator, and may also be created through automatic discovery by using the link layer discovery protocol LLDP.

The first acquiring module of the PE queries, according to the first VPN user identity, a preset correspondence table for the VPN identity and VPN configuration to acquire a route distinguish RD/route target RT list corresponding to the first VPN user identity so as to configure a VPN ins tance. The correspondence table for the VPN identity and VPN configuration in the embodiment of the present invention may be a VPN User ID and RD/RT list, where the RD/RT list may be stored on the PE, and the RD/RT corresponding to a VPN User ID is acquired through query, and the RD/RT list may further be stored on an authentication server or a VPN manager (Manager) other than the PE, and the first acquiring module may acquire the RD/RT corresponding to the VPN User ID through an independent authentication process.

The first determining module of the PE in the embodiment of the present invention determines the physical port and logical port at the PE end of the AC according to the connection identity (including a physical port and a logical port) at the DCG end of the attachment circuit AC in the request message, binds the determined logical port with the configured VPN instance, configures a port IP address, and configures a route learning method between the PE and the DCG, thereby realizing connection of the VDC to the VPN.

The PE in the embodiment of the present invention may further include a state setting module, where the state setting module sets the PE side of the attachment circuit AC to be in a block state before the first receiving module receives the request message. Specifically, the block state is as follows: The physical ports and logical ports at both ends of the attachment circuit AC are normal; block the ports and block the IP connection at the PE side, do not configure a VPN instance and do not configure a binding relationship between the VPN instance and the physical port/logical port (or, configure a VPN instance but not bind the configured VPN instance with the physical port/logical port) on the PE, and neither receive nor publish the VPN route of the PE at the VPN side.

FIG. 4 is a second schematic structural diagram of a provider edge for connecting to a virtual private network across domains. The provider edge 400 includes:
a second receiving module 402, configured to receive a request message for connecting a virtual data centre VDC to a first virtual private network VPN, sent by a data centre gateway DCG through a first link connection, where the request message includes a first VPN user identity;
a second acquiring module 404, configured to query, according to the first VPN user identity, a preset correspondence table for VPN identity and VPN configuration to acquire a route distinguish RD/route target RT list corresponding to the first VPN user identity to configure a VPN instance; and
a second determining module 406, configured to allocate a local logical port and physical port to the configured VPN instance, and bind the logical port with the VPN instance, so that the virtual data centre VDC is connected to the VPN.

The second receiving module of the provider edge PE receives a request message for connecting a virtual data centre VDC created by a DCG to a first VPN sent by the DCG, where the request message includes a first VPN user identity, that is, a User ID of the VPN to which the VDC is to be connected. The request message further includes IP addresses at both ends of the attachment circuit AC, where the IP addresses are a pair of IP addresses allocated by the DCG to the attachment circuit AC, between the PE and the DCG, of the created VDC. The request message for connecting the VDC to the VPN is sent through a first link connection, where the first link connection may include an IPv4 BGP link, a protocol link that bears 802.1X, and an LDP link. A connection relationship table for the physical ports and logical ports at both ends is stored at both the PE and the DCG. In this way, given that information about the remote physical and logical ports is known, information about the local physical and logical ports can be determined by querying the corresponding connection relationship table. The connection relationship table for the physical ports and logical ports at the local and remote ends may be manually created by an administrator, and may also be created through automatic discovery by using the link layer discovery protocol LLDP.

The second acquiring module of the PE queries, according to the first VPN user identity, a preset correspondence table for the VPN identity and VPN configuration to acquire a route distinguish RD/route target RT list corresponding to the first VPN user identity so as to configure a VPN instance. The correspondence table for the VPN identity and VPN configuration may be a VPN User ID and RD/RT list, where the RD/RT list may be stored on the PE, and the RD/RT corresponding to a VPN User ID is acquired through query, and the RD/RT list may further be stored on an authentication server or a VPN manager (Manager) other than the PE, and the second acquiring module may acquire the RD/RT corresponding to the VPN User ID through an independent authentication process.

The second determining module of the PE allocates a local logical port and physical port to the VPN instance configured in the second acquiring module, binds the logical port with the VPN instance, configures a port IP address, and configures a route learning method between the PE and the DCG.

In addition to the second receiving module, the second acquiring module, and the second determining module, the PE further includes a second sending module 408, where the second sending module 408 sends an AC allocation success message to the DCG after the PE successfully allocates the attachment circuit AC (including the physical port and the logical port), where the message includes information about the local logical port and physical port allocated by the PE.

The PE may further include a state setting module, where the state setting module sets the PE side of the attachment circuit AC to be in a block state before the second receiving module receives the request message. Specifically, the block state is as follows: The physical ports and logical ports at both ends of the attachment circuit AC are normal; block the ports and block the IP connection at the PE side, do not configure a VPN instance and do not configure a binding relationship between the VPN instance and the physical port/logical port (or, configure a VPN instance but not bind the configured VPN instance with the physical port/logical port) on the PE, and neither receive nor publish the VPN route of the PE at the VPN side.

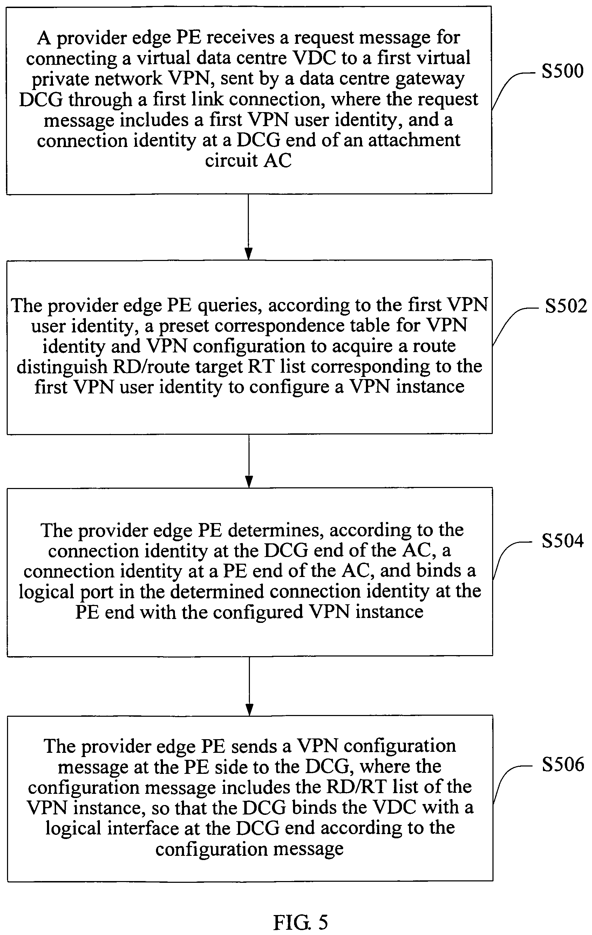

FIG. 5 is a third schematic flowchart of a method for connecting to a virtual private network across domains. The method may specifically include the following steps.
S500: A provider edge PE receives a request message for connecting a virtual data centre VDC to a first virtual private network VPN, sent by a data centre gateway DCG through a first link connection, where the request message includes a first VPN user identity, and a connection identity at a DCG end of an attachment circuit AC.
S502: The provider edge PE queries, according to the first VPN user identity, a preset correspondence table for VPN identity and VPN configuration to acquire a route distinguish RD/route target RT list corresponding to the first VPN user identity to configure a VPN instance.
S504: The provider edge PE determines, according to the connection identity at the DCG end of the AC, a connection identity at a PE end of the AC, and binds a logical port in the determined connection identity at the PE end with the configured VPN instance.
S506: The provider edge PE sends a VPN configuration message at the PE side to the DCG, where the configuration message includes the RD/RT list of the VPN instance, so that the DCG binds the VDC with a logical interface at the DCG end according to the configuration message.

As an example, the embodiment may be applied in the Option D interconnection scenario, where the link used for transferring the request message is an IPv4 VPN BGP link configured between the PE and the DCG. Before the DCG sends the request message for connecting the VDC to the VPN to the PE, the pre-configuration operation on the DCG includes: creating a VDC on the DCG, that is, creating a VPN instance that includes the required DC resources in the DC for the user; and allocating an attachment circuit AC corresponding to the VDC, where the attachment circuit AC includes a physical port and a logical port. The pre-configuration operation on the DCG further includes: allocating a pair of IP addresses to the AC, between the PE and the DCG, of the VDC according to an IP address segment at a VPN site given when a user

requests connection to the VPN. As an example, the request message for connecting the VDC to the VPN sent by the DCG to the PE may further include a pair of IP addresses allocated on the DCG to the AC, between the PE and the DCG, of the VDC, that is, IP addresses at both ends of the attachment circuit AC.

A connection relationship table for the physical ports and logical ports at both ends is stored at both the PE and the DCG. In this way, given that information about the remote physical and logical ports is known, information about the local physical and logical ports can be determined by querying the corresponding connection relationship table. The connection relationship table for the physical ports and logical ports at the local and remote ends may be manually created by an administrator, and may also be created through automatic discovery by using the link layer discovery protocol LLDP.

Before the PE receives the request message for connecting the VDC to the VPN, in addition to performing pre-configuration on the DCG, the PE further needs to perform pre-configuration at the PE side, and set the attachment circuit AC at the PE side to be in a block state. Specifically, the block state is as follows: The physical ports and logical ports at both ends of the attachment circuit AC are normal; block the ports and block the IP connection at the PE side, do not configure a VPN instance and do not configure a binding relationship between the VPN instance and the physical port/logical port (or, configure a VPN instance but not bind the configured VPN instance with the physical port/logical port) on the PE, and neither receive nor publish the VPN route at the VPN side.

The PE queries, according to the first VPN user identity, a preset correspondence table for the VPN identity and VPN configuration to acquire an RD/RT list corresponding to the first VPN user identity so as to configure a VPN instance. The correspondence table for the VPN identity and VPN configuration may be a VPN User ID and RD/RT list, where the RD/RT list may be stored on the PE, and the RD/RT corresponding to a VPN User ID is acquired through query, and the RD/RT list may further be stored on an authentication server or a VPN manager (Manager) other than the PE, and the PE may acquire the RD/RT corresponding to the VPN User ID through an independent authentication process.

The PE determines, according to the connection identity at the DCG end of the AC, a connection identity at the PE end of the AC, where the connection identity includes a physical port and a logical port, binds the determined logical port with the configured VPN instance, and configures a port IP address to complete Option D related configuration at the PE side. Then the PE returns VPN configuration information at the PE end to the DCG, where the configuration information includes VPN configuration information about the VPN instance at the PE side, and
specifically includes the RD and RT list information. The packet format of the VPN configuration message at the PE end returned by the PE to the DCG may be shown in Table 5. The message includes notification type (Notify Type), where the notification type of this message is local VPN information (Local VPN Info), that is, VPN configuration information at the PE end, and the message further includes RD length and RD value information and RT length and RT value information.

**Table 5**

| Notify Type=Local VPN Info | |
|---|---|
| RD length | RD value (variable, variable length) |
| RT length | RT value (variable, variable length) |

The data centre gateway DCG receives the VPN configuration message at the PE side sent by the PE, configures the VDC created by the DCG end according to the RD and RT list in the configuration message, and binds the VDC with the logical port at the DCG end to complete Option D related configuration at the DCG end.

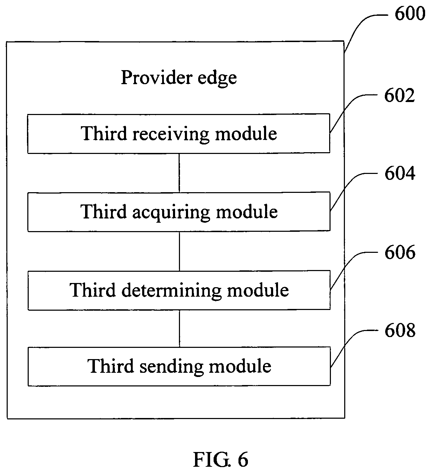

FIG. 6 is a third schematic structural diagram of a provider edge for connecting to a virtual private network across domains. The provider edge 600 includes:
a third receiving module 602, configured to receive a request message for connecting a virtual data centre VDC to a first virtual private network VPN, sent by a data centre gateway DCG through a first link connection, where the request message includes a first VPN user identity, and a connection identity at a DCG end of an attachment circuit AC;
a third acquiring module 604, configured to query, according to the first VPN user identity, a preset correspondence table for VPN identity and VPN configuration to acquire a route distinguish RD/route target RT list corresponding to the first VPN user identity to configure a VPN instance;
a third determining module 606, configured to determine, according to the connection identity at the DCG end of the AC, a connection identity at a PE end of the AC, and bind a logical port in the determined connection identity at the PE end with the configured VPN instance; and
a third sending module 608, configured to send a VPN configuration message at a PE side to the DCG, where the configuration message includes the RD/RT list of the VPN instance, so that the DCG binds the VDC with a logical interface at the DCG end
according to the configuration message.

The third receiving module receives a request message for connecting a VDC to a VPN sent by a DCG through a first link connection. The request message includes a first VPN identity, and a connection identity at a DCG end of an attachment circuit AC. The request message may further include IP addresses at both ends of the attachment circuit AC, where the IP addresses are a pair of IP addresses allocated by the DCG to the attachment circuit AC, between the PE and the DCG, of the VDC. The third acquiring module queries, according to the first VPN user identity, a preset correspondence table for VPN identity and VPN configuration to acquire a route distinguish RD/route target RT list corresponding to the first VPN user identity to configure a VPN instance. The third determining module determines, according to the connection identity at the DCG end of the attachment circuit AC, a connection identity, including a physical port and a logical port, at a PE end, binds the logical port with the configured VPN instance, and configures the port IP address to complete Option D configuration at the PE side. The third sending module returns a VPN configuration message at the PE end to the DCG, where the configuration message includes the RD and RT information of the VPN instance at the PE side, so that the DCG binds the VDC with the logical port at the DCG side according to the RD and RT information in the configuration message.

The PE may further include a state setting module, where the state setting module sets the PE side of the attachment circuit AC to be in a block state before the third receiving module receives the request message. Specifically, the block state is as follows: The physical ports and logical ports at both ends of the attachment circuit AC are normal; block the ports and block the IP connection at the PE side, do not configure a VPN instance and do not configure a binding relationship between the VPN instance and the physical port/logical port (or, configure a VPN instance but not bind the configured VPN instance with the physical port/logical port) on the PE, and neither receive nor publish the VPN route of the PE at the VPN side.

In conclusion, by implementing the method and device for connecting to a VPN across domains provided in the present invention, connection of a VDC to a VPN can be realized by exchanging inband request messages on the premise of interconnection in the Option A or Option D mode, thereby significantly improving the processing efficiency of connecting the VDC to the VPN.

Persons of ordinary skill in the art may understand that all or part of the steps in the method according to the embodiments may be implemented by a computer program instructing relevant hardware. The program may be stored in a computer readable storage medium. When the program is run, the steps of the method according to the embodiments are performed. The storage medium may be a magnetic disk, an optical disk, a read-only memory (Read-Only Memory, ROM), or a random access memory (Random Access Memory, RAM).

## Claims

1. A method for connecting to a virtual private network across domains, comprising:
receiving, by a provider edge PE, a request message for connecting a virtual data centre VDC to a first virtual private network VPN, sent by a data centre gateway DCG through a first link connection, wherein the request message comprises a first VPN user identity, and a connection identity at a DCG end of an attachment circuit AC (S100);
querying, by the provider edge PE, according to the first VPN user identity, a preset correspondence table for VPN identity and VPN configuration to acquire a route distinguish RD/route target RT list corresponding to the first VPN user identity to configure a VPN instance (S102); and
determining, by the provider edge PE, according to the connection identity at the DCG end of the AC, a connection identity at a PE end of the AC, and binding a logical port in the determined connection identity at the PE end with the configured VPN instance, so that the virtual data centre VDC is connected to the VPN (S104).

2. The method according to claim 1, wherein the first link connection comprises a border gateway protocol BGP link, a protocol link that bears 802.1X, or a label distribution protocol LDP link.

3. The method according to claim 2, wherein before the receiving, by the provider edge PE, the request message for connecting the VDC to the VPN, the method further comprises:
creating a virtual data centre VDC on the DCG according to a user request, and allocating an attachment circuit AC corresponding to the VDC, wherein the attachment circuit comprises a physical port and a logical port, and
binding the VDC with the logical port, allocating IP addresses to the attachment circuit AC of the VDC according to an IP address segment at a VPN site given when a user requests connection to the VPN, and configuring a route learning method between the PE and the DCG.

4. The method according to any one of claims 1 to 3, wherein the preset correspondence table for VPN identity and VPN configuration is stored in an authentication server or a VPN manager, and the provider edge PE acquires the route distinguish RD/route target RT list corresponding to the first VPN user identity through an authentication process.

5. The method according to any one of claims 1 to 4, wherein both the provider edge PE and the data centre gateway DCG store a connection correspondence relationship table for physical ports and logical ports at both ends.

6. The method according to any one of claims 1 to 5, wherein before the receiving (S100), by the provider edge PE, the request message for connecting the VDC to the VPN, the method further comprises setting the PE side of the attachment circuit AC to be in a block state.

7. A provider edge (300) for connecting to a virtual private network across domains, comprising:
a first receiving module (302), configured to receive a request message for connecting a virtual data centre VDC created by a data centre gateway DCG to a first virtual private network VPN, sent by the DCG through a first link connection, wherein the request message comprises a first VPN user identity, and a connection identity at a DCG end of an attachment circuit AC;
a first acquiring module (304), configured to query, according to the first VPN user identity, a preset correspondence table for VPN identity and VPN configuration to acquire a route distinguish RD/route target RT list corresponding to the first VPN user identity to configure a VPN instance; and
a first determining module (306), configured to determine, according to the connection identity at the DCG end of the AC, a connection identity at a PE end of the AC, and bind a logical port in the determined connection identity at the PE end with the configured VPN instance, so that the virtual data centre VDC is connected to the VPN.

8. The provider edge according to claim 7, further comprising:
a state setting module, configured to set the PE side of the attachment circuit AC to be in a block state.

## Patentansprüche

1. Verfahren zum Verbinden mit einem virtuellen privaten Netz über Domänen, das Folgendes umfasst:
Empfangen durch ein "Provider Edge", PE, einer Anforderungsnachricht zum Verbinden eines virtuellen Datenzentrums, VDC, mit einem ersten virtuellen privaten Netz, VPN, die durch ein Datenzentrums-Gateway, DCG, über eine erste Streckenverbindung gesendet wird, wobei die Anforderungsnachricht eine erste VPN-Anwenderkennung und eine Verbindungskennung an einem DCG-Ende einer Anschlussschaltung, AC, umfasst (S100);
Abfragen durch das "Provider Edge", PE, gemäß der ersten VPN-Anwenderkennung einer voreingestellten Zuordnungstabelle nach der VPN-Kennung und VPN-Konfiguration, um eine Wegeunterscheidungs-/Wegeziel-Liste, RD/RT-Liste, die der ersten VPN-Anwenderkennung entspricht, zu erfassen, um eine VPN-Instanz zu konfigurieren (S102); und
Bestimmen durch das "Provider Edge", PE, gemäß der Verbindungskennung an dem DCG-Ende der AC einer Verbindungskennung eines PE-Endes der AC und Binden eines logischen Ports in der bestimmten Verbindungskennung an dem PE-Ende mit der konfigurierten VPN-Instanz, so dass das virtuelle Datenzentrum, VDC, mit dem VPN verbunden ist (S104).

2. Verfahren nach Anspruch 1, wobei die erste Streckenverbindung eine "Border-Gateway"-Protokoll-Strecke, BGP-Strecke, eine Protokollstrecke, die 802.1X trägt, oder eine Etikettverteilungsprotokoll-Strecke, LDP-Strecke, umfasst.

3. Verfahren nach Anspruch 2, wobei das Verfahren vor dem Empfangen durch das "Provider Edge", PE, der Anforderungsnachricht zur Verbindung des VDC mit dem VPN ferner Folgendes umfasst:
Erzeugen eines virtuellen Datenzentrums, VDC, auf dem DCG gemäß einer Anwenderanforderung und Zuweisen einer Anschlussschaltung, AC, die dem VDC entspricht, wobei die Anschlussschaltung einen physikalischen Port und einen logischen Port umfasst, und
Binden des VDC mit dem logischen Port, Zuweisen von IP-Adressen zu der Anschlussschaltung, AC, des VDC gemäß einem IP-Adressensegment an einem VPN-Standort, der angegeben wird, wenn ein Anwender Verbindung mit dem VPN anfordert, und Konfigurieren eines Wegelernverfahrens zwischen dem PE und dem DCG.

4. Verfahren nach einem der Ansprüche 1 bis 3, wobei die voreingestellte Zuordnungstabelle für VPN-Kennung und VPN-Konfiguration in einem Authentifizierungs-Server oder einem VPN-Manager gespeichert ist und das "Provider Edge", PE, die Wegeunterscheidungs-/Wegeziel-Liste, RD/RT-Liste, die der ersten VPN-Anwenderkennung entspricht, über einen Authentifizierungsprozess erfasst.

5. Verfahren nach einem der Ansprüche 1 bis 4, wobei sowohl das "Provider Edge", PE, als auch das Datenzentrums-Gateway, DCG, eine Verbindungszuordnungsbeziehungstabelle für physikalische Ports und logische Ports an beiden Enden speichern.

6. Verfahren nach einem der Ansprüche 1 bis 5, wobei das Verfahren vor dem Empfangen (S100) durch das "Provider Edge", PE, der Anforderungsnachricht zum Verbinden des VDC mit dem VPN ferner Einstellen der PE-Seite der Anschlussschaltung, AC, so dass sie in einem Sperrzustand ist, umfasst.

7. "Provider Edge" (300) zum Verbinden mit einem virtuellen privaten Netz über Domänen, das Folgendes umfasst:
ein erstes Empfangsmodul (302), das konfiguriert ist, eine Anforderungsnachricht zum Verbinden eines virtuellen Datenzentrums, VDC, das durch ein Datenzentrums-Gateway, DCG, erzeugt ist, mit einem ersten virtuellen privaten Netz, VPN, die durch das DCG über eine erste Streckenverbindung gesendet wird, zu empfangen, wobei die Anforderungsnachricht eine erste VPN-Anwenderkennung und eine Verbindungskennung an einem DCG-Ende einer Anschlussschaltung, AC, umfasst;
ein erstes Erfassungsmodul (304), das konfiguriert ist, gemäß der ersten VPN-Anwenderkennung eine voreingestellte Zuordnungstabelle nach der VPN-Kennung und VPN-Konfiguration abzufragen, um eine Wegeunterscheidungs-/Wegeziel-Liste, RD/RT-Liste, die der ersten VPN-Anwenderkennung entspricht, zu erfassen, um eine VPN-Instanz zu konfigurieren; und
ein erstes Bestimmungsmodul (306), das konfiguriert ist, gemäß der Verbindungskennung an dem DCG-Ende der AC eine Verbindungskennung eines PE-Endes der AC zu bestimmen und einen logischen Port in der bestimmten Verbindungskennung an dem PE-Ende mit der konfigurierten VPN-Instanz zu binden, so dass das virtuelle Datenzentrum, VDC, mit dem VPN verbunden ist.

8. "Provider Edge" nach Anspruch 7, das ferner Folgendes umfasst:
ein Zustandseinstellungsmodul, das konfiguriert ist, die PE-Seite der Anschlussschaltung, AC, einzustellen, so dass sie in einem Sperrzustand ist.

## Revendications

1. Procédé de connexion à un réseau privé virtuel à travers des domaines, comprenant les étapes suivantes :
recevoir, par un bord de fournisseur, PE, un message de demande pour connecter un centre de données virtuel, VDC, à un premier réseau privé virtuel, VPN, envoyé par une passerelle de centre de données, DCG, par l'intermédiaire d'une première connexion de liaison, où le message de demande comprend une première identité d'utilisateur de VPN, et une identité de connexion au niveau d'une extrémité DCG d'un circuit d'attachement, AC (S100) ;
interroger, par le bord de fournisseur PE, selon la première identité d'utilisateur de VPN, une table de correspondance prédéfinie pour une identité de VPN et une configuration de VPN pour acquérir une liste Route Distinguisher, RD/Route Target, RT, correspondant à la première identité d'utilisateur de VPN pour configurer une instance de VPN (S102) ; et
déterminer, par le bord de fournisseur, PE, selon l'identité de connexion au niveau de l'extrémité DCG de l'AC, une identité de connexion au niveau d'une extrémité PE de l'AC, et lier un port logique dans l'identité de connexion déterminée à l'extrémité PE avec l'instance de VPN configurée, de manière à ce que le centre de données virtuel VDC soit connecté au VPN (S104).

2. Procédé selon la revendication 1, dans lequel la première connexion de liaison comprend une liaison de protocole de passerelle frontière, BGP, une liaison de protocole qui supporte 802.1X, ou une liaison de protocole de distribution d'étiquettes, LDP.

3. Procédé selon la revendication 2, dans lequel, avant la réception, par le bord de fournisseur PE, du message de demande pour connecter le VDC au VPN, le procédé comprend en outre les étapes suivantes :
créer un centre de données virtuel VDC sur la DCG selon une demande de l'utilisateur, et allouer un circuit d'attachement AC correspondant au VDC, où le circuit d'attachement comprend un port physique et un port logique, et
lier le VDC avec le port logique, allouer des adresses IP au circuit d'attachement AC du VDC selon un segment d'adresse IP au niveau d'un site VPN donné lorsqu'un utilisateur demande une connexion au VPN, et configurer un procédé d'apprentissage de route entre le PE et la DCG.

4. Procédé selon l'une quelconque des revendications 1 à 3, dans lequel la table de correspondance prédéfinie pour l'identité du VPN et la configuration du VPN est stockée dans un serveur d'authentification ou un gestionnaire de VPN, et le bord de fournisseur, PE, acquiert la liste Route Distinguisher, RD/Route Target, RT, correspondant à la première identité d'utilisateur de VPN par l'intermédiaire d'un processus d'authentification.

5. Procédé selon l'une quelconque des revendications 1 à 4, dans lequel à la fois le bord de fournisseur, PE, et la passerelle de centre de données, DCG, stockent une table de relation de correspondance de connexion pour des ports physiques et des ports logiques aux deux extrémités.

6. Procédé selon l'une quelconque des revendications 1 à 5, dans lequel, avant la réception (S100), par le bord de fournisseur, PE, du message de demande pour connecter le VDC au VPN, le procédé comprend en outre de définir le côté PE du circuit d'attachement, AC, pour être dans un état bloqué.

7. Bord de fournisseur (300) pour se connecter à un réseau privé virtuel à travers des domaines, comprenant :
un premier module de réception (302), configuré pour recevoir un message de demande pour connecter un centre de données virtuel, VDC, créé par une passerelle de centre de données, DCG, à un premier réseau privé virtuel, VPN, envoyé par la DCG par l'intermédiaire d'une première connexion de liaison, où le message de demande comprend une première identité d'utilisateur de VPN, et une identité de connexion au niveau d'une extrémité DCG d'un circuit d'attachement, AC ;
un premier module d'acquisition (304), configuré pour interroger, selon la première identité d'utilisateur de VPN, une table de correspondance prédéfinie pour une identité de VPN et une configuration de VPN pour acquérir une liste Route Distinguisher, RD/Route Target, RT, correspondant à la première identité d'utilisateur de VPN pour configurer une instance de VPN ; et
un premier module de détermination (306), configuré pour déterminer, selon l'identité de connexion au niveau de l'extrémité DCG de l'AC, une identité de connexion au niveau d'une extrémité PE de l'AC, et lier un port logique dans l'identité de connexion déterminée à l'extrémité PE avec l'instance de VPN configurée, de manière à ce que le centre de données virtuel VDC soit connecté au VPN.

8. Bord de fournisseur selon la revendication 7, comprenant en outre :
un module de définition d'état, configuré pour définir le côté PE du circuit d'attachement, AC, pour être dans un état bloqué.
